# NEUE EUROPÄISCHE PATENTSCHRIFT

(11) **EP 0 782 780 B2**
(45) Veröffentlichungstag und Bekanntmachung des Hinweises auf die Entscheidung über den Einspruch: **18.09.2002**
(45) Hinweis auf die Patenterteilung: 09.06.1999
(21) Anmeldenummer: 95931940.1
(22) Anmeldetag: 30.08.1995
(51) Int. Cl.: H02K 5/14

(54) **BÜRSTENTRAGEPLATTE**
BRUSH-HOLDER PLATE
PLAQUE PORTE-BALAI

(30) Priorität: 31.08.1994 DE 4430954
(43) Veröffentlichungstag der Anmeldung: 09.07.1997
(73) Patentinhaber: ITT Automotive Europe GmbH, 60488 Frankfurt am Main (DE)
(72) Erfinder: SCHEELE, Hubert, D-74189 Weinsberg (DE); HUBER, Walter, D-74321 Bietigheim-Bissingen (DE); BÜHL, Harro, D-74366 Kirchheim (DE)
(74) Vertreter: Dreiss, Fuhlendorf, Steimle & Becker
(86) Internationale Anmeldenummer: EP9503406
(87) Internationale Veröffentlichungsnummer: WO96007230

(56) Entgegenhaltungen:
- DE-A- 2 360 182
- US-A- 4 293 789
- US-A- 5 006 747
- US-A- 5 089 735

## Beschreibung

Die Erfindung bezieht sich auf eine Bürstentrageplatte auf der Kocher befestigt sind, in denen Bürsten geführt sind, wobei die Führung der Bürsten unter Federbelastung in radialer Richtung auf einen zentralen Durchbruch in der Trageplatte hin erfolgt, mit einem Haltering, wobei an der äußeren Mantel fläche die Bürsten anliegen und der Haltering in axialer Richtung verschiebbar ist, wobei der Haltering eine nach radial aussen weisende umlaufende Kante aufweist, die in einer Vormontageposition an den Köchern liegt.

Die Verwendung eines Halteringes zur Montagevereinfachung ist bereits aus der US 5 089 735 bekannt. Der Haltering befindet sich in einer Vormontageposition aufgespreizt zwischen den Bürsten und hält diese in einer zurückgeschobenen Position. Bei der Endmontage wird der Haltering durch das Einführen des Rotors mit dem Kollektor derart axial verschoben, daß die Bürsten auf die Kollektoroberfläche gelangen. Zwar ist der Haltering nach der Endmontage in einer Ausnehmung einer Halteplatte sicher befestigt aber diese Anordnung hat den Nachteil, daß sich der Haltering bereits vor der Endmontage ungewollt in axialer Richtung verschieben kann. Dies führt letztlich dazu, daß die Kohlebürsten unkontrolliert mit dem Kollektor in Kontakt gelangen, was Schwerwiegende Störungen des automatisierten Montagevorganges zur Folge hat.

Eine Bürstentrageplatte der eingangs beschriebenen Art ist durch die Schunk Motorensysteme GmbH, Ganderkesee, vorbenutzt worden. Aufgabe der Erfindung ist es, die Positionssicherheit der Montage von Bürstenhalteplatten zu verbessern.

Diese Aufgabe wird durch die Merkmale des Anspruchs 1 gelöst.

Mit den vorstehenden Merkmalen wird der Haltering in seiner Vormontageposition besonders einfach und kostengünstig festgelegt.

Anhand von drei Figuren soll im folgenden ein Ausführungsbeispiel näher erläutert werden.

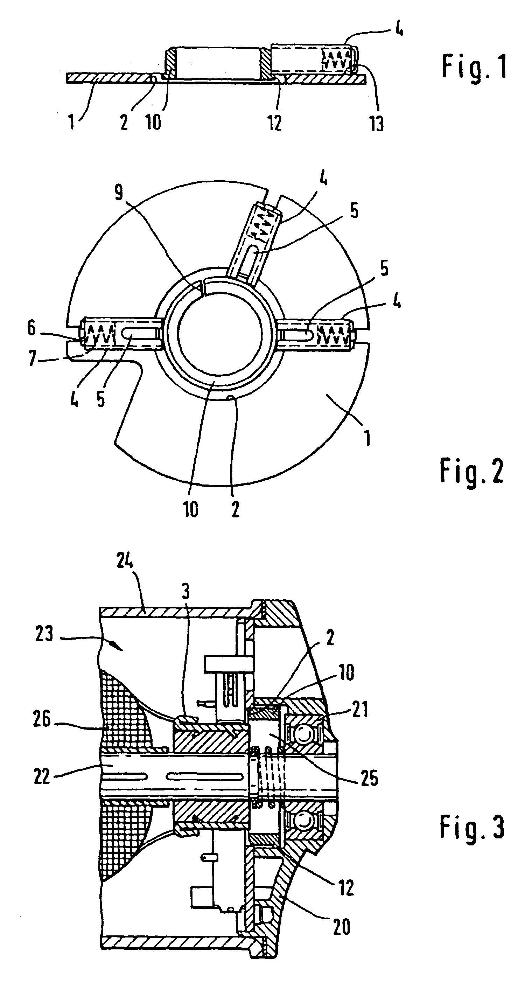

- Figur 1 und 2: zeigen eine Bürstentrageplatte, wobei
Figur 1 einen Querschnitt und
Figur 2 eine Draufsicht auf die Bürstentrageplatte zeigt.
- Figur 3: zeigt einen Querschnitt durch einen Elektromotor nach der Montage und die sich daraus ergebende neue Position des Halterings.

Zunächst wird auf die Figuren 1 und 2 Bezug genommen. Mit 1 wird die Trageplatte (Bürstentrageplatte) als Ganzes bezeichnet. Sie ist im wesentlichen kreisringförmig, das heißt ihr Außenrand ist der Kontur des Gehäuses des Elektromotors angepaßt, während der Durchbruch 2 kreisförmig ist und einen Durchmesser aufweist, der im wesentlichen dem Durchmesser des Kollektors 3 entspricht. Auf der Trageplatte sind mehrere Köcher 4 mit Bürsten 5 angeordnet.

Die Köcher 4 gruppieren sich konzentrisch um den inneren Durchbruch 2.

Ein Köcher 4 ist üblicherweise aus einem vorgestanzten Blech gefaltet. Seine Außenkontur ist im wesentlichen quaderförmig, die vordere Stimseite ist offen, so daß die eingesteckte Bürste 5 aus ihr herausragt.

Die hintere Seite ist durch eine Verschlußlasche 6 verschlossen. Zwischen der Bürste 5 und der Verschlußlasche 6 befindet sich eine Feder 7, die die Bürste 5 nach innen drückt und dafür sorgt, daß ein guter elektrisch leitender Kontakt zwischen der Bürste 5 und dem Kollektor 3 entsteht. Die Federn 7 bewirken, (wenn keine geeignete Rückhaltevorrichtung vorgesehen Ist), daß die Bürsten vor dem Durchbruch gedrückt würden. Dies hätte zur Folge, daß die Bürstentrageplatte nicht auf den Kollektor 3 aufgeschoben werden könnte.

Um dies zu verhindern, ist ein Haltering 10 vorgesehen. Wie der Figur 1 zu entnehmen ist, hat der Haltering eine Höhe, die etwa der Höhe des Köchers 4 entspricht. In der gezeigten Position hat der Haltering einen Außendurchmesser, der im wesentlichen dem Durchmesser eines gedachten Kreises entspricht, an dem die inneren Stirnseiten der Köcher 4 angrenzen.

Die Federn 7 drücken daher die Bürsten 5 gegen die äußere Mantelfläche des Halterings 10. Es wird damit verhindert, daß die Bürsten vor dem Durchbruch 2 geschoben werden. Der Haltering weist weiterhin eine umlaufende Kante 12 auf, die sich, wie die Figur 1 zeigt gegen die Grundseite 13 der Köcher 4 liegt, wobei die Grundseite der Köcher die Seite ist, die mit der Bürstentrageplatte verbunden ist.

Die Figur 3 zeigt einen Elektromotor nach seiner Montage.

Die Bürstentrageplatte 1 ist mit einem Lagerschild 20 verbunden. Dieses Lagerschild 20 ist Teil eines Gehäuses, das ein Getriebe oder eine Pumpe umschließt. Der Lagerschild 20 trägt ein Lager 21, durch das die Ankerwelle 22 des Elektromotors 23 hindurchgeführt ist. Auf der Welle 22 befindet sich der Kollektor 3 sowie die Rotorwicklungen 24. Diese sind mit dem Kollektor 3 verbunden. Der Elektromotor 23 weist weiterhin ein topfförmiges Gehäuse 24 auf, das auf den Lagerschild 20 aufsteckbar ist.

Im Lagerschild 20 ist ein Aufnahmeraum 25 vorgesehen. Dieser ist zylindrisch und öffnet sich zu der Seite des Schildes 20, das nach der Montage des Elektromotors in das Innere des Elektromotorgehäuses hineinzeigt.

Der Durchmesser des Aufnahmeraums 25 entspricht in etwa dem Durchmesser des Durchbruchs 2 in der Bürstentrageplatte. Da die inneren Enden der Köcher 4 etwas Ober die Kante des Inneren Durchbruchs hinausragen, und der von ihnen eingeschlossene Kreis in etwa dem Durchmesser des Kollektors entspricht, ist der Durchmesser des Kollektors kleiner als der Durchmesser des Aufnahmeraums 25.

Zur Montage des Elektromotors wird zunächst das Lager 21 in die Lageraufnahme eingesteckt, die sich an den Aufnahmeraum 25 anschließt. Sodann wird die Bürstentrageplatte, falls sie nicht einheitlich mit dem Lagerschild ausgebildet ist, auf dem Lagerschild aufgesetzt. Dabei befindet sich der Haltering 10 noch vor den offenen Enden der Köcher 4, so daß die Bürsten nicht nach innen gedrückt werden können. Sodann wird die Ankerwelle 4 mit dem Kollektor 3 auf den Lagerschild aufgesteckt. Dabei legt sich der Kollektor 3 zunächst an den Haltering an und schiebt ihn gemäß der Darstellung der Figur 3 nach rechts. Der Kollektor 3 verdrängt dabei nach und nach den Ring und schiebt ihn in Richtung auf den Aufnahmeraum 25.

Der Kollektor 3 ersetzt somit nach und nach den Haltering 3, so daß sich die Bürsten 4 ohne daß sich ihre radiale Position ändert, in Kontakt gelangen mit dem Kollektor 3.

Sobald der Kollektor 3 den Haltering 10 vollständig aus dem Bereich der Köcher 4 herausgedrückt hat, weitet er sich aufgrund seiner federnden Vorspannung auf und legt sich an die Seitenwände des Aufnahmeraums. Um die Aufweitung zu ermöglichen, ist der Haltering 10 geschlitzt (Schlitz 9).

Der Durchmesser des Aufnahmeraums und die radiale Federung des Halterings 10 sind derart aufeinander abgestimmt, daß der Haltering sich noch mit Vorspannung an die Wände des Aufnahmeraums 25 anlegt. Damit entsteht ein Reibschluß zwischen dem Ring und den Wänden des Aufnahmeraums, der dafür sorgt, daß der Ring unverrückbar im Lagerschild 20 liegt. Es können daher keine Klappergeräusche und kein unerwünschter Abrieb auftreten.

Anschließend wird das topfförmige Gehäuse 24 auf das Lagerschild aufgesetzt und der Motor komplettiert.

## Patentansprüche

1. Bürstentrageplatte auf der Köcher (4) befestigt sind, in denen Bürsten (5) geführt sind, wobei die Führung der Bürsten (5) unter Federbelastung in radialer Richtung auf einen zentralen Durchbruch (2) in der Trageplatte (1) hin erfolgt, mit einem radial federnd vorgespannten Haltering (10), wobei an der äußeren Mantelfläche die Bürsten (4) anliegen und der Haltering (10) in axialer Richtung verschiebbar ist, wobei der Haltering (10) mit einer nach radial außen weisenden umlaufenden Kante (12) versehen ist, welche in einer Vormontageposition an der der Bürstentrageplatte zugewandten Grundseite (13) der Köcher (4) anliegt.

## Claims

1. Brush holder plate, on which casings (4) accommodating brushes (5) are mounted, the brushes (5) extending under spring load in a radial direction towards a central aperture (2) in the holder plate (1), including a radially resilient pretensioned retaining ring (10), the brushes (4) abutting on the external periphery thereof, and the retaining ring (10) being slidable in an axial direction, wherein the retaining ring (10) has a radially outwardly directed circumferential edge (12) which abuts on a base side (13) of the casings (4) in a preassembly position.

## Revendications

1. Plaque porte-balais, sur laquelle sont fixés des logements (4), dans lesquels sont guidés des balais (5), le guidage des balais (5) s'effectuant sous la charge d'un ressort dans une direction radiale vers un passage central (2) aménagé dans la plaque de support (1), et comportant une bague de retenue (10) précontrainte élastiquement radialement, et dans laquelle les balais (4) s'appliquent contre la surface enveloppe extérieure et la bague de retenue (10) est déplaçable dans une direction axiale, et dans laquelle la bague de retenue (10) est pourvue d'un bord circonférentiel (12), qui s'étend radialement vers l'extérieur et qui s'applique, dans une position de préassemblage, contre une face de base (13) des logements (4).
